# EUROPEAN PATENT APPLICATION

(11) **EP 4 187 521 A1**
(43) Date of publication of application: **31.05.2023**
(21) Application number: 22174074.9
(22) Date of filing: 18.05.2022
(51) Int. Cl.: G08G 1/01, H04L 67/12, H04W 4/40, G08G 1/0967

(54) **METHOD AND APPARATUS FOR AUTONOMOUS DRIVING VEHICLE IDENTIFICATION IN AUTONOMOUS DRIVING ENVIRONMENT**

(30) Priority: 29.11.2021 KR 20210166653
(71) Applicant: Penta Security Systems, Inc., Seoul 07241 (KR); Autocrypt Co., Ltd., Seoul 07241 (KR)
(72) Inventor: LEE, Won Haeng, 04985 Seoul (KR); SIM, Sang Gyoo, 06939 Seoul (KR); KIM, Duk Soo, 03747 Seoul (KR); LEE, Seok Woo, 04604 Seoul (KR)
(74) Representative: Stöckeler, Ferdinand

(57) **Abstract**

A method for identifying autonomous driving vehicles, performed by an autonomous driving vehicle identification apparatus installed in a roadside unit (RSU), may comprise: receiving, from a vehicle entering a vehicle-to-infrastructure (V2I) communication area of the RSU, a probe vehicle data (PVD) message; determining whether a data element indicating an autonomous driving level is present in the PVD message; and in response to determining that the data element does not exist in the PVD message, identifying the vehicle transmitting the PVD message as a normal vehicle.

## Description

### CROSS-REFERENCE TO RELATED APPLICATIONS

This application claims priority to Korean Patent Application No. 10-2021-0166653 filed on November 29, 2021, with the Korean Intellectual Property Office (KIPO), the entire contents of which are hereby incorporated by reference.

### BACKGROUND

### 1. Technical Field

Exemplary embodiments of the present disclosure relate to a method for identifying autonomous driving vehicles, and more particularly, to a method and an apparatus for identifying autonomous driving vehicles by using vehicle-to-everything (V2X) communication data in an autonomous driving environment.

### 2. Related Art

It should be possible to identify whether a target vehicle driving in an autonomous driving environment, such as an autonomous driving demonstration complex or a road with an autonomous driving lane, is an autonomous driving vehicle. The autonomous driving vehicle may be classified as a vehicle that can operate on its own without manipulation of a driver or passenger. In order to ensure a safe autonomous driving environment, autonomous driving technologies and cooperative intelligent transport systems (C-ITS) communication technologies should be properly combined. The C-ITS may be configured to transmit data collected by various sensors and cameras mounted on the vehicle to a center and transmit information received from the center back to the vehicle to utilize the information for real-time movement of the vehicle.

In relation to the C-ITS, a pilot project was started on the Daejeon-Sejong expressway and an 80km section of the Daejeon-Sejong urban road in 2014. In Korea, 15 traffic safety-related implementation and research projects for the introduction and expansion of C-ITS are in progress. Recently, related regulations and laws are being revised so that autonomous driving public transport buses can use dedicated lanes. The law states that autonomous driving vehicles intended for use as a means of public transportation may use dedicated bus lanes. As such, the establishment and operation of autonomous driving lanes is coming true, and there is a possibility that dedicated lanes for autonomous driving vehicles or separate autonomous driving vehicle pilot operation districts are operated to activate the autonomous driving vehicles and C-ITS.

Meanwhile, for autonomous driving vehicle identification, a method such as vehicle information inquiry through license plate recognition may be used. However, this method is highly dependent on optical character recognition (OCR) technologies for recognizing a license plate, and it is required to go through a process of requesting, after the recognition of the license plate, vehicle information from a database (DB) server that can inquire the vehicle information or a server that manages the vehicle information. In this reason, it may be difficult to expedite the identification of autonomous driving vehicles. In addition, there may be a problem in that personal information may be infringed due to information theft or hacking due to an external attack in the process of license plate recognition and vehicle information inquiry.

### SUMMARY

Accordingly, exemplary embodiments of the present disclosure are provided to substantially obviate one or more problems due to limitations and disadvantages of the related art.

Exemplary embodiments of the present disclosure provide an autonomous driving vehicle identification method for allowing a roadside unit (RSU) to identify whether a subject vehicle is an autonomous driving vehicle or a vehicle having an autonomous driving function by additionally defining an autonomous driving vehicle identification factor in a V2X message.

Exemplary embodiments of the present disclosure also provide an autonomous driving vehicle identification method which copes with to a driving negotiation scenario by additionally defining an autonomous driving vehicle identification factor in a message frame conforming to a V2X communication data specification defined by the society of automotive engineers (SAE) 2735, etc.

Exemplary embodiments of the present disclosure also provide an autonomous driving vehicle identification apparatus which can efficiently identify autonomous driving vehicles and can be mounted in an RSU.

According to a first exemplary embodiment of the present disclosure, a method for identifying autonomous driving vehicles, performed by an autonomous driving vehicle identification apparatus installed in a roadside unit (RSU), may comprise: receiving, from a vehicle entering a vehicle-to-infrastructure (V2I) communication area of the RSU, a probe vehicle data (PVD) message; determining whether a data element indicating an autonomous driving level is present in the PVD message; and in response to determining that the data element does not exist in the PVD message, identifying the vehicle transmitting the PVD message as a normal vehicle.

The method may further comprise: in response to determining that the data element indicates an autonomous driving level equal to or greater than 1, identifying the vehicle transmitting the PVD message as an autonomous driving vehicle.

The method may further comprise: in response to determining that the data element indicating an autonomous driving level less than 1, identifying the vehicle transmitting the PVD message as a non-autonomous driving vehicle or a connected car without an autonomous driving function.

The data element indicating the autonomous driving level may be a data element DE_AutonomousLevel.

A data frame including the data element may be a specific data frame indicating an autonomous driving status.

The specific data frame may further include a data element DE_ODDinfo defining operation design domain (ODD) information and/or a data element DE_FallbackStatus defining fallback information.

According to a second exemplary embodiment of the present disclosure, a method for identifying autonomous driving vehicles, performed by an autonomous driving vehicle identification apparatus installed in a roadside unit (RSU), may comprise: receiving, from a vehicle entering a vehicle-to-infrastructure (V2I) communication area of the RSU, a probe vehicle data (PVD) message; determining whether a data element indicating an autonomous driving level is present in the PVD message; determining whether the data element indicates an autonomous driving level equal to or greater than 1; and in response to determining that the data element indicates an autonomous driving level equal to or greater than 1, identifying the vehicle transmitting the PVD message as an autonomous driving vehicle.

The method may further comprise: in response to determining that the data element indicates an autonomous driving level less than 1, identifying the vehicle transmitting the PVD message as a non-autonomous driving vehicle or a connected car without autonomous driving functions; and in response to determining that the data element does not exist in the PVD message, identifying the vehicle transmitting the PVD message as a normal vehicle.

The data element indicating the autonomous driving level may be a data element DE_AutonomousLevel.

A data frame including the data element may be a specific data frame indicating an autonomous driving status.

The specific data frame may further include a data element DE_ODDinfo defining operation design domain (ODD) information and/or a data element DE _FallbackStatus defining fallback information.

According to a third exemplary embodiment of the present disclosure, an autonomous driving vehicle identification apparatus for identifying an autonomous driving vehicle, which is installed in a roadside unit (RSU), may comprise: a wireless communication module (WCM) supporting vehicle-to-everything (V2X) communication; and at least one processor connected to the WCM, wherein the at least one processor is configured to: receive, from a vehicle entering a vehicle-to-infrastructure (V2I) communication area of the RSU, a probe vehicle data (PVD) message; determine whether a data element indicating an autonomous driving level is present in the PVD message; determine whether the data element indicates an autonomous driving level equal to or greater than 1; and in response to determining that the data element indicates an autonomous driving level equal to or greater than 1, identify the vehicle transmitting the PVD message as an autonomous driving vehicle.

The at least one processor may be further configured to: in response to determining that the data element indicates an autonomous driving level less than 1, identify the vehicle transmitting the PVD message as a non-autonomous driving vehicle or a connected car without autonomous driving functions; and in response to determining that the data element does not exist in the PVD message, identify the vehicle transmitting the PVD message as a normal vehicle.

The data element indicating the autonomous driving level may be a data element DE_AutonomousLevel.

A data frame including the data element may be a specific data frame indicating an autonomous driving status.

The specific data frame may further include a data element DE _ODDinfo defining operation design domain (ODD) information and/or a data element DE _FallbackStatus defining fallback information.

According to the present disclosure described above, an autonomous driving vehicle identification factor may be defined in a V2X message, so that a roadside unit (RSU) can efficiently identify whether a target vehicle located within a communication area of the RSU is an autonomous driving vehicle or a vehicle equipped with an autonomous driving function. In addition, by configuring to identify the autonomous driving vehicle in a manner in which the identification factor is additionally defined in a V2X message frame conforming to the V2X communication data specification defined in the SAE J2735, etc., it may be made possible to effectively respond to the driving negotiation scenario. In addition, according to the present disclosure, it may be made possible to provide an efficient identification method for autonomous driving vehicles that can expect a fast response speed by using an extended form of the SAE J2735 message set. In addition, according to the present disclosure, a data frame for probe vehicle data (PVD) can be defined by including only autonomous vehicle identification and status (e.g., level, ODD, fallback) information, and can be used independently from message frames or data frames for driving negotiation based on the identification information, thereby having the advantage of effectively identifying autonomous driving vehicles.

### BRIEF DESCRIPTION OF DRAWINGS

FIG. 1 is a conceptual diagram for describing a C-ITS for ensuring a safe autonomous driving environment for autonomous driving vehicles.
FIG. 2 is a conceptual diagram for describing a roadside unit (RSU) used in the autonomous driving environment of FIG. 1.
FIG. 3 is a block diagram illustrating a configuration of an autonomous driving vehicle identification apparatus according to an exemplary embodiment of the present disclosure.
FIG. 4 is a conceptual diagram for describing an operation principle of the vehicle identification apparatus of FIG. 3.
FIG. 5 is a flowchart of a vehicle identification method according to another exemplary embodiment of the present disclosure.
FIG. 6 is a conceptual diagram of the SAE J2735 message set that can be employed in the vehicle identification method of FIG. 5.
FIG. 7 is a conceptual diagram illustrating an extended form of the SAE J2735 message set that can be employed in the vehicle identification method of FIG. 5.

### DETAILED DESCRIPTION OF THE EMBODIMENTS

Exemplary embodiments of the present disclosure are disclosed herein. However, specific structural and functional details disclosed herein are merely representative for purposes of describing exemplary embodiments of the present disclosure. Thus, exemplary embodiments of the present disclosure may be embodied in many alternate forms and should not be construed as limited to exemplary embodiments of the present disclosure set forth herein.

Accordingly, while the present disclosure is capable of various modifications and alternative forms, specific exemplary embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular exemplary embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

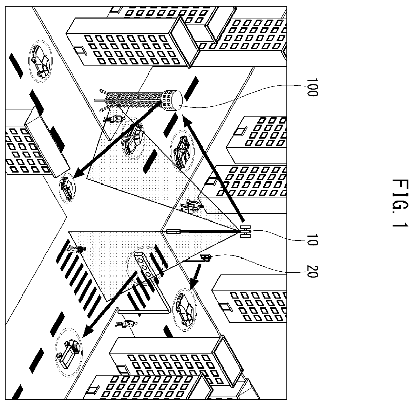

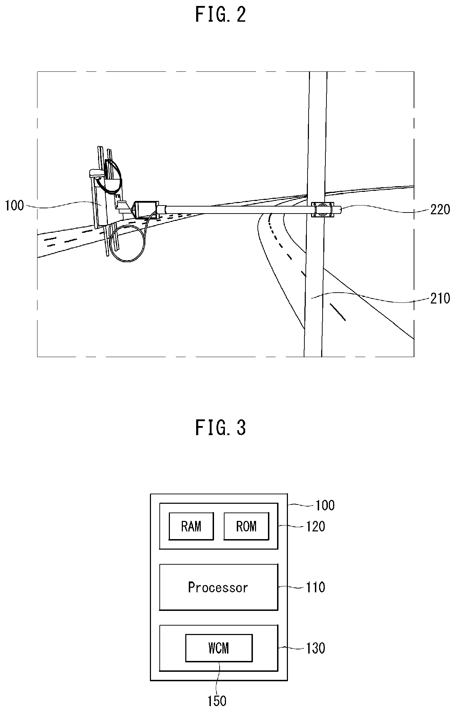

FIG. 1 is a conceptual diagram for describing a C-ITS for ensuring a safe autonomous driving environment for autonomous driving vehicles, and FIG. 2 is a conceptual diagram for describing a roadside unit (RSU) used in the autonomous driving environment of FIG. 1.

The next-generation C-ITS is a service system for sharing information about surrounding roads and traffic conditions to vehicle drivers in real time. It operates to strengthen traffic safety through bidirectional information sharing between vehicles or between a vehicle and a pedestrian or infrastructure based on vehicle-to-vehicle (V2V) communication, vehicle-to-infrastructure (V2I) communication, and vehicle-to-everything (V2X) communication. Here, the infrastructure includes a base station, a roadside unit (RSU) 100, a detector 10, a traffic signal controller 20, and the like.

The RSU 100 may include a base station or may be included in a base station, and may include an autonomous driving vehicle identification apparatus according to the present exemplary embodiments. In addition, the RSU 100 may support wireless access for vehicle environment (WAVE) communication, and/or may support cellular V2X (C-V2X) communication based on 4G long-term evolution (LTE) or 5G new radio (NR).

In addition, the C-ITS may provide information on pedestrians detected through V2I communication, provide accident information, or guide traffic signals. In addition, using the C-ITS, vehicles may exchange information between vehicles. For example, a specific vehicle may receive emergency situation information about an accident from another vehicle through V2V communication.

As shown in FIG. 2, the RSU 100 may be installed as being fixed by a support frame having a vertical frame 210 installed on a roadside and a horizontal frame 220 coupled with the vertical frame 210 at a predetermined height of the vertical frame 210. The RSU 100 may have a means for implementing a vehicle identification method or a component for performing a function corresponding to the means. In the present disclosure, such the means or component may be referred to as an 'autonomous driving vehicle identification apparatus' or 'vehicle identification apparatus'.

The above-described RSU 100 may be configured to provide environmental information of an autonomous driving vehicle, rather than simply determining whether a target vehicle is equipped with an autonomous driving function as a vehicle identification apparatus. That is, it may be configured to provide information on an operation design domain (ODD) for each autonomous driving level. In other words, the RSU 100 of the present exemplary embodiment, as the vehicle identification apparatus, may operate to transmit a probe vehicle data (PVD) message in which an autonomous driving identification factor including ODD information is defined, so that the ODD information can be used for driving negotiation between autonomous driving vehicles. In addition, when a dynamic driving task (DDT) occurs, information on a fallback subject may be shared through the PVD message.

As described above, according to the present exemplary embodiments, it is made possible to increase the availability of data by providing the status information such as ODD and fallback information together with the autonomous driving level.

FIG. 3 is a block diagram illustrating a configuration of an autonomous driving vehicle identification apparatus according to an exemplary embodiment of the present disclosure.

As shown in FIG. 3, the autonomous driving vehicle identification apparatus 100 (or 'vehicle identification apparatus') may include at least one processor 110, a memory 120, and a transceiver 130 connected with a network to perform communications. In addition, the vehicle identification apparatus 100 may further include an input interface device, an output interface device, a storage device, and the like. In addition, the respective components included in the vehicle identification apparatus 100 may be connected by a bus to communicate with each other.

The processor 110 may execute program commands stored in at least one of the memory 120 and the storage device. The processor 110 may refer to a central processing unit (CPU), a graphics processing unit (GPU), or a dedicated processor on which methods according to exemplary embodiments of the present disclosure are performed.

Each of the memory 120 and the storage device may be configured as at least one of a volatile storage medium and a non-volatile storage medium. For example, the memory 120 may be configured as at least one of a read only memory (ROM) and a random access memory (RAM).

The transceiver 130 may include a wireless communication module (WCM) 150. The WCM 150 may include a communication subsystem supporting a 5.8 or 5.9 GHz band dedicated short range communication (DSRC), local area communication network such as IEEE 802.11 and Wi-Fi, or WAVE communication. The communication subsystem may include related components such as an initialization kernel, transport kernel, and broadcast kernel of an application layer for wireless communication with a vehicle terminal (e.g., on-board equipment (OBE) or on-board unit (OBU)) and follow preconfigured operational procedures. In addition, the communication subsystem, as an ITS or C-ITS communication system, may include a layer 7 (L7) of the system (i.e., application layer), that is, an application layer structure, kernel elements, and a manager.

Further, the WCM 150 may perform two-way radio frequency (RF) communication with a human machine interface (HMI) connected to an antenna of a vehicle terminal or onboard device. The HMI may be connected to an in-vehicle computer coupled with the OBE having an antenna through an in-vehicle network. The WCM may receive a message including information on positions, speeds, directions, and accelerations of vehicles within a 300 meter range every 100 ms to 300 ms.

The above-described vehicle identification apparatus 100 may be included in a communication system comprising a plurality of base stations or a plurality of terminals, and may function as one base station or an RSU. When functioning as a base station or RSU, the vehicle identification apparatus may be referred to as a NodeB (NB), evolved NodeB (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), roadside unit (RSU), radio remote head (RRH), transmission point (TP), transmission and reception point (TRP), or the like.

In addition, the vehicle identification apparatus 100 may be connected to a support system, vehicle terminal, mobile terminal, and/or the like through a network to perform communications. Here, each of the vehicle terminal or the mobile terminal may be referred to as a user equipment (UE), terminal equipment (TE), advanced mobile station (AMS), high reliability-mobile station (HR-MS), terminal, access terminal, mobile terminal, station, subscriber station, mobile station, portable subscriber station, node, device, on board unit (OBU), or the like.

The above-described vehicle identification apparatus 100 may be mounted on or include an RSU, and may be configured to identify autonomous driving vehicles in a V2I communication area of the RSU.

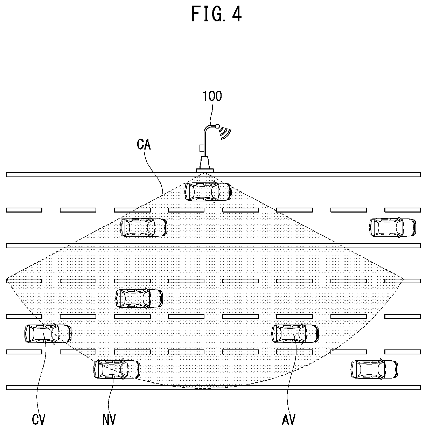

FIG. 4 is a conceptual diagram for describing an operation principle of the vehicle identification apparatus of FIG. 3.

Referring to FIG. 4, the vehicle identification apparatus 100 may be installed in an autonomous driving complex, and may perform an operation for identifying autonomous driving vehicles within a lane or preventing abuse of autonomous driving lanes.

Data used for autonomous driving vehicle identification by the vehicle identification apparatus 100 may follow the specification documents defined by the SAE J2735. In the present exemplary embodiments, it is assumed that the autonomous driving vehicle or 'connected car' are capable of V2X communication and that communication data satisfies the SAE J2735 specifications. For example, messages to be transmitted and received may be configured to maintain message frame formats defined by the SAE J2735 and configured to include data frame(s) modified or added for autonomous driving vehicle identification.

In the present exemplary embodiments, the RSU 100 corresponding to the vehicle identification apparatus may receive probe vehicle data (PVD) messages from surrounding vehicles within a communication area (CA), and may identify a vehicle that does not transmit a PVD message as a normal vehicle (NV), that is, a vehicle that is not equipped with an autonomous driving function. In addition, based on a data element or a value stored in the data element within a specific data frame predefined in the PVD message, the RSU 100 may accurately determine whether the vehicle transmitting the PVD message is a normal vehicle (NV), connected car (CV), or autonomous driving vehicle (AV).

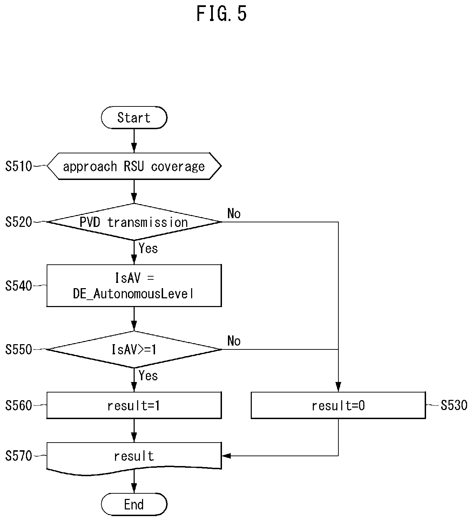

FIG. 5 is a flowchart of a vehicle identification method according to another exemplary embodiment of the present disclosure.

Referring to FIG. 5, a vehicle identification apparatus may be mounted on an RSU (hereinafter, referred to as `RSU#1') to identify autonomous driving vehicles on a road. To this end, the vehicle identification apparatus may detect an approach of a vehicle (hereinafter referred to as a 'first vehicle') entering a communication area of the RSU#1 (S510).

Then, the first vehicle entering the communication area of RSU#1 may transmit a PVD message to the RSU#1 (S520).

A transmission message specification for the PVD message is currently being actively discussed in the International Organization for Standardization (ISO, TC204). The basic definition or purpose of PVD may be collecting information such as vehicle status information, vehicle location information, and vehicle driving information in various wireless communication environments that do not depend on a specific wireless communication scheme. The vehicle status information includes an engine status, whether or not an automatic brake system (ABS) is operated, and the like, the vehicle location information includes a longitude, latitude, and altitude of the vehicle, and the vehicle driving information includes a path, heading, and the like of the vehicle.

That is, the PVD message may include information on a generation time (i.e., timestamp) of the information, location information, and information on vehicle events and statuses collected from in-vehicle sensors. Here, the timestamp may be managed by a time sensor of an OBE or a global positioning system (GPS) of the vehicle. The location information may be generated by a location sensor such as the GPS and stored as values of longitude, latitude, and altitude fields in the PVD message.

In addition, the in-vehicle sensors may include an electronic control unit (ECU) and an onboard diagnostics (OBD). The sensor data of the in-vehicle sensors may be stored in a periodic probe data element field or an event-based probe data element field, or stored in a probe data element extension field.

In addition, a frequency, communication interval, or generation periodicity of the PVD message may be variously set to 1 second to 1 minute, when an event occurs, when entering a communication area of an RSU, or the like.

Then, the vehicle identification apparatus may acquire, from the RSU #1, information on a vehicle that has transmitted a PVD message frame and a vehicle that has not transmitted a PVD message frame. In this case, the vehicle identification apparatus may determine the vehicle that has not transmitted a PVD message as a normal vehicle without a V2X communication function or non-autonomous driving vehicle, and may output the determination result as a preset first result value (e.g., result = 0) (S530). Here, the normal vehicle may be a vehicle that does not have V2X communication capability and autonomous driving functions, and the non-autonomous driving vehicle may be a connected car that has V2X communication capability but does not have autonomous driving functions.

Then, the vehicle identification apparatus may identify a data element within a specific data frame predefined in the PVD message frame transmitted from the vehicle (S540). Here, the specific predefined data frame and data element may be predefined to identify an autonomous driving vehicle (S540).

For example, a data element (DE) for autonomous driving vehicle identification may have a form such as DE_AutonomousLevel included in the specific data frame. Here, the specific data element DE AutonomousLevel may indicates an autonomous driving level of the vehicle transmitting the PVD message, and may be defined to be usable in an autonomous driving vehicle or a vehicle having autonomous driving functions.

As a result of the above identification, if the specific data element is included in the predefined data frame or has a specific value (S550), the vehicle identification apparatus may determine the vehicle that has transmitted the PVD message as an autonomous driving vehicle or a vehicle equipped with autonomous driving functions, and output the determination result as a preset second result value (e.g., result=1) (S560).

The vehicle identification apparatus may identify autonomous driving vehicles among vehicles within the communication area of RSU#1 through a third result obtained by integrating the first result values and the second result values.

Meanwhile, the vehicle identification apparatus may not be limited to being mounted on an RSU and may be implemented to include an RSU. In this case, the vehicle identification apparatus may include a base station or may be included in a base station.

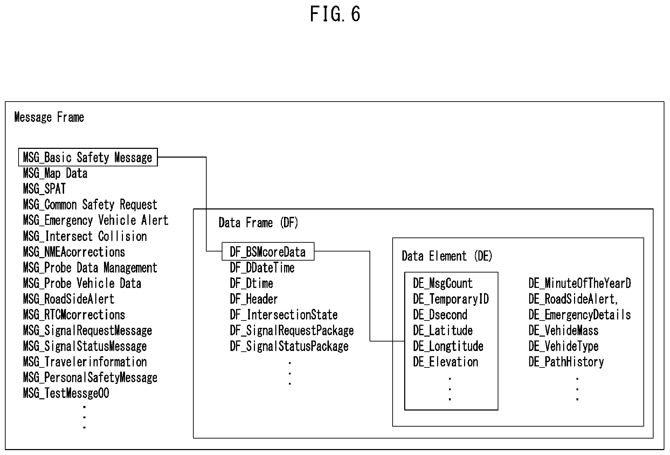

FIG. 6 is a conceptual diagram of the SAE J2735 message set that can be employed in the vehicle identification method of FIG. 5.

Referring to FIG. 6, the SAE J2735 message set may include message frames, data frames (DF) included in the message frame, and data elements (DE) included in the data frame.

The message frames may include a message frame for a basic safety message (e.g., MSG_Basic Safety Message), a message frame for map data, a message frame for signal phase and timing (SPAT), a message frame for a common safety request, a message frame for an emergency vehicle alert, a message frame for preventing a risk of an intersection collision, a message frame for probe data management, a message frame for probe vehicle data (PVD), a message frame for a roadside alert, and the like. For details on such message frames, reference may be made to the definition of the SAE J2735 message set.

The data frames may include data frames such as basic safety message core data (e.g., DF _BSMcoreData), date and time data (e.g., DF_DDateTeime), intersection state data (e.g., DF_IntersectionState), signal request package data (e.g., DF_SignalRequestPackage), and the like. For details on such data frames, reference may be made to the definition of the data frames of the SAE J2735 message set.

The data elements may include data elements such as the number of messages (e.g., DE MsgCount), temporary ID (e.g., DE_TemporaryID), latitude (e.g., DE_Latitude), longitude (e.g., DE Longtitude), elevation (e.g., DE Elevation), and the like. For details on such data elements, reference may be made to the definition of the data elements of the SAE J2735 message set.

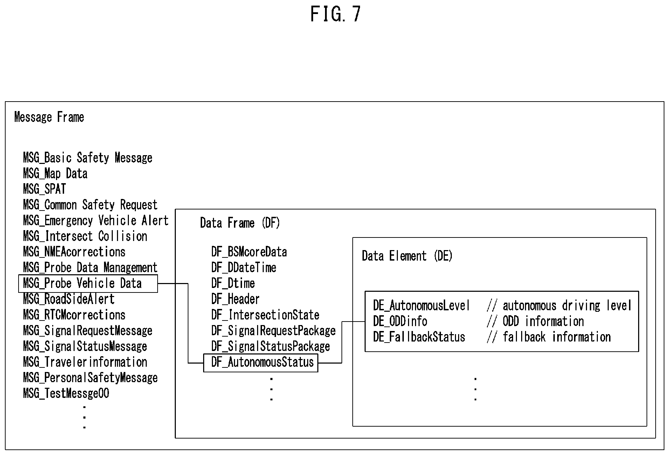

FIG. 7 is a conceptual diagram illustrating an extended form of the SAE J2735 message set that can be employed in the vehicle identification method of FIG. 5.

Referring to FIG. 7, for use in the vehicle identification method, a data frame DF_AutonomousStatus indicating an autonomous driving status, which is a new data frame, may be additionally defined as a data frame in the message frame MSG_Probe Vehicle Data of PVD data. In addition, as data elements of the data frame DE_AutonomousStatus, a data element DE_AutonomousLevel that defines the autonomous driving level, a data element DE _ODDinfo that defines ODD information, and a data element DE_FallbackStatusdefining fallback information may be defined in an extended form.

That is, for autonomous driving vehicle identification, the data frame (i.e., DFAutonomous Status) capable of identifying an autonomous driving vehicle may be defined in the PVD message, and a data element including an identification factor within the newly defined data frame may be used to identify an autonomous driving vehicle. To this end, the data frame DF_AutonomousStatus may include an autonomous vehicle identification factors and may include data elements including information such as the autonomous driving level, ODD, and fallback.

According to the present exemplary embodiment, by additionally defining the PVD message type, data frame, and data element required for autonomous driving vehicle identification, it is possible to quickly identify an autonomous driving vehicle in a simple scheme that does not require a separate process such as a server inquiry.

The exemplary embodiments of the present disclosure may be implemented as program instructions executable by a variety of computers and recorded on a computer-readable medium.

The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions, and alterations may be made herein without departing from the scope of the present disclosure.

## Claims

1. A method for identifying autonomous driving vehicles, performed by an autonomous driving vehicle identification apparatus installed in a roadside unit (RSU), the method comprising:
receiving, from a vehicle entering a vehicle-to-infrastructure (V2I) communication area of the RSU, a probe vehicle data (PVD) message;
determining whether a data element indicating an autonomous driving level is present in the PVD message; and
in response to determining that the data element does not exist in the PVD message, identifying the vehicle transmitting the PVD message as a normal vehicle.

2. The method according to claim 1, further comprising: in response to determining that the data element indicates an autonomous driving level equal to or greater than 1, identifying the vehicle transmitting the PVD message as an autonomous driving vehicle.

3. The method according to claim 2, further comprising: in response to determining that the data element indicating an autonomous driving level less than 1, identifying the vehicle transmitting the PVD message as a non-autonomous driving vehicle or a connected car without an autonomous driving function.

4. The method according to claim 1, wherein the data element indicating the autonomous driving level is a data element DE_AutonomousLevel.

5. The method according to claim 1, wherein a data frame including the data element is a specific data frame indicating an autonomous driving status.

6. The method according to claim 5, wherein the specific data frame further includes a data element DE _ODDinfo defining operation design domain (ODD) information and/or a data element DE _FallbackStatusdefining fallback information.

7. A method for identifying autonomous driving vehicles, performed by an autonomous driving vehicle identification apparatus installed in a roadside unit (RSU), the method comprising:
receiving, from a vehicle entering a vehicle-to-infrastructure (V2I) communication area of the RSU, a probe vehicle data (PVD) message;
determining whether a data element indicating an autonomous driving level is present in the PVD message;
determining whether the data element indicates an autonomous driving level equal to or greater than 1; and
in response to determining that the data element indicates an autonomous driving level equal to or greater than 1, identifying the vehicle transmitting the PVD message as an autonomous driving vehicle.

8. The method according to claim 7, further comprising:
in response to determining that the data element indicates an autonomous driving level less than 1, identifying the vehicle transmitting the PVD message as a non-autonomous driving vehicle or a connected car without autonomous driving functions; and
in response to determining that the data element does not exist in the PVD message, identifying the vehicle transmitting the PVD message as a normal vehicle.

9. The method according to claim 7, wherein the data element indicating the autonomous driving level is a data element DE_AutonomousLevel.

10. The method according to claim 7, wherein a data frame including the data element is a specific data frame indicating an autonomous driving status.

11. The method according to claim 10, wherein the specific data frame further includes a data element DE _ODDinfo defining operation design domain (ODD) information and/or a data element DE_FallbackStatusdefining fallback information.

12. An autonomous driving vehicle identification apparatus for identifying an autonomous driving vehicle, which is installed in a roadside unit (RSU), the autonomous driving vehicle identification apparatus comprising:
a wireless communication module (WCM) supporting vehicle-to-everything (V2X) communication; and
at least one processor connected to the WCM,
wherein the at least one processor is configured to:
receive, from a vehicle entering a vehicle-to-infrastructure (V2I) communication area of the RSU, a probe vehicle data (PVD) message;
determine whether a data element indicating an autonomous driving level is present in the PVD message;
determine whether the data element indicates an autonomous driving level equal to or greater than 1; and
in response to determining that the data element indicates an autonomous driving level equal to or greater than 1, identify the vehicle transmitting the PVD message as an autonomous driving vehicle.

13. The autonomous driving vehicle identification apparatus according to claim 12, wherein the at least one processor is further configured to:
in response to determining that the data element indicates an autonomous driving level less than 1, identify the vehicle transmitting the PVD message as a non-autonomous driving vehicle or a connected car without autonomous driving functions; and
in response to determining that the data element does not exist in the PVD message, identify the vehicle transmitting the PVD message as a normal vehicle.

14. The autonomous driving vehicle identification apparatus according to claim 12, wherein the data element indicating the autonomous driving level is a data element DE_AutonomousLevel.

15. The autonomous driving vehicle identification apparatus according to claim 12, wherein a data frame including the data element is a specific data frame indicating an autonomous driving status.

16. The autonomous driving vehicle identification apparatus according to claim 15, wherein the specific data frame further includes a data element DE _ODDinfo defining operation design domain (ODD) information and/or a data element DE _FallbackStatus defining fallback information.
